# EUROPEAN PATENT APPLICATION

(11) **EP 1 236 635 A1**
(43) Date of publication of application: **04.09.2002**
(21) Application number: 01105102.6
(22) Date of filing: 02.03.2001
(51) Int. Cl.: B62B 13/04

(54) **Sliding apparatus for a foot scooter**

(71) Applicant: Stoll, Alain, 2503 Bienne (CH)
(72) Inventor: Stoll, Alain, 2503 Bienne (CH); Ehrsam, Nicolas, 2533 Evilard (CH)
(74) Representative: Balsters, Robert

(57) **Abstract**

The present invention concerns a sliding apparatus (1) for a foot scooter (2) having a front- and a rear-wheel (3, 4), comprising: a first elongated surfer (5) having a first supporting and fixing member (6, 7) mounted on the first surfer (5), and a second elongated surfer (8) having a second supporting and fixing member (9) mounted on the second surfer (8).

According to the present invention the first supporting and fixing member (6) is arranged to support and grasp a foot-support (2a) of the scooter so as to fixedly attach the scooter to the first surfer (5), and the second supporting and fixing member (9) has a scooter-wheel receiving section (9a) for receiving the front-wheel (3) of the scooter, and further has scooter-wheel blocking means (9b) for maintaining the wheel (3) in said scooter-wheel receiving section (9a) so as to fixedly attach the scooter to the second surfer (8), thereby enabling the foot scooter to slide on snow.

## Description

The present invention concerns a sliding apparatus for a foot scooter allowing to use the scooter for snow sports.

It is known to use a foot scooter for snow sports. A conventional foot scooter may be transformed into a snow foot scooter by removing the front-- and rear-wheels of the scooter and by mounting miniature skis in place of these wheels.

However, this device suffers from several major drawbacks. Indeed, due to the size of the skis, the device is not very stable thus endangering the health of the user when using under more sportive conditions.

Furthermore, the user must use tools for removing the wheels, and then also for mounting the skis. This is awkward, time-consuming and cumbersome. Moreover, the assembly and disassembly leads to a high wear of the means required for maintaining the wheels or the skis in place. Thus, after a certain period of time, the reliability of the foot scooter will drastically reduce. As the high wear may even lead to rupture of vital mounting elements, this wear will ultimately render the scooter useless.

The object of the present invention is to propose a new sliding apparatus that overcomes the mentioned drawbacks.

Another object of the present invention is to propose such sliding apparatus that is compatible with industrial constraint in term of reliability, performances and cost.

Thus, the present invention concerns a sliding apparatus as defined in the appended claims.

Thanks to the inventive sliding apparatus, it is possible to mount sliding surfers onto the foot scooter without having to remove the wheels. The front wheel of the scooter is simply inserted into appropriate fixing means for ensuring that the scooter remains fixedly attached to the surfer. The rear-wheel may also be attached in a similar manner to the surfer, but it is also possible to simply attach the foot support of the scooter to the surfer without having to remove the rear-wheel. Thus, a user can rapidly transform his scooter in a sliding apparatus and he will avoid increased wear of vital elements of his scooter.

Other features and advantages of the sliding apparatus according to the present invention will become clear from reading the following description, which is given solely by way of a non-limitative example thereby referring to the attached drawings in which:
FIGURE 1 is a schematic view of a preferred embodiment of the sliding apparatus according to the present invention,
FIGURE 2 shows a schematic view of another embodiment of a supporting and fixing member of the sliding apparatus according to the present invention.

The sliding apparatus according to the present invention allows for easy mounting of a foot scooter, such as conventional foot scooters and also the collapsible mini foot scooters, so as to enable the user of the foot scooter to use his device for snow sports, i.e. for sliding on snow. To this effect, the sliding apparatus comprises an elongated surfer, such as a snowboard or any other runner which may slide on snow such as a ski, provided with means for receiving the foot scooter and for attaching the scooter to the sliding apparatus. A foot scooter generally has a front and a rear-wheel, the front-wheel being linked to a steering bar with handles allowing the user to steer with the device. The sliding apparatus according to the present invention thus has a front surfer for receiving the front part of the scooter, i.e. the front-wheel section, and a rear surfer for receiving the rear part of the scooter, i.e. the foot support and the rear-wheel section. In principle, the front surfer is shorter than the rear surfer for manoeuvrability reasons.

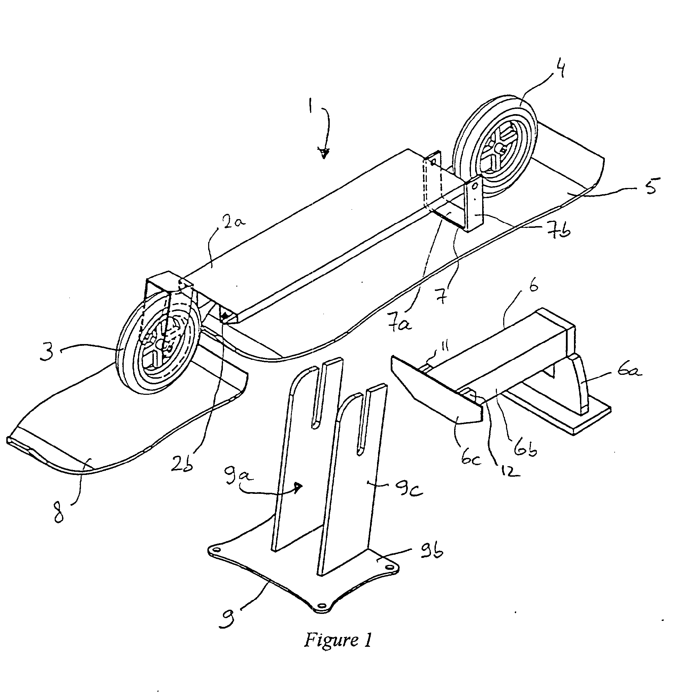

Figure 1 shows a preferred embodiment of the present inventive sliding apparatus 1 for a foot scooter. As shown, sliding apparatus 1 comprises a first elongated surfer 5 (rear surfer) arranged so as to receive the rear part of a scooter. First surfer 5 is provided with at least one first supporting and fixing member 6 mounted on first surfer 5. The manner in which this supporting and fixing member is mounted onto the surfer may be any conventional manner which ensures that this member will stay fixedly attached to the surfer. Thus, it can be attached by bolting it to the surfer or by gluing it, or the like.

In a similar manner, the sliding apparatus 1 further comprises a second elongated surfer 8 (front surfer) arranged to receive the front part of the scooter. Second surfer 8 is provided with a second supporting and fixing member 9 mounted conventionally on second surfer 8.

Preferably, the dimensions of the surfers are chosen as shown in the document US-A-5 351 975 so as to ensure excellent conditions of stability and manoeuvrability of the sliding apparatus, even in soft powder snow.

In a variant, the first and second surfers may be physically linked to each other, or indeed even formed of a single piece. In such case, the sliding apparatus thus consists of a long surfer having a front-part and a rear-part, where the front-part corresponds to second surfer 8 and the rear-part corresponds to first surfer 5. However, it may be understood that in such case, the manoeuvrability of the sliding apparatus is reduced as compared to two separate surfers.

As mentioned above, both surfers are provided with supporting and fixing means to support the scooter and to ensure that the surfers remains attached to the scooter, even in extreme sporting conditions such as when using the sliding apparatus for jumps or other acrobatic movements in snow.

First surfer 5 is thus provided with at least one supporting and fixing member. In the preferred embodiment, first surfer 5 comprises two supporting and fixing members 6 and 7. Front supporting and fixing member 6 is arranged on first surfer 5 to receive the tip of the foot support 2a of foot scooter 2 so as to grasp and clamp the tip. By sliding and pushing the tip of foot support 2a into front supporting and fixing member 6, this tip, and thus the scooter, will be fixedly attached to first surfer 5. To this effect, front supporting and fixing member 6 consist of a base portion 6a attached to first surfer 5, an arm portion 6b, extending from the base portion along the longitudinal axis of first surfer 5, and a clamp portion 6c forming the extremity of arm portion 6b. Clamp portion 6c has two projections 11, 12 arranged parallel and to the edges on either side of the clamp portion. These projections 11, 12 extend away from the clamp portion in a direction parallel to the longitudinal axis of the foot support 2a. Normally, a foot support is provided with small cavities 2b located at the front lateral side of the foot support, as shown schematically in the drawing. Thus, by inserting the projections 11, 12 into these cavities, the foot support, and thus the scooter, will be fixedly attached to first surfer 5. However, if the foot support is not provided with such cavities, it is possible to use other conventional clamping means, such as a foot support tip-receiving section for surrounding and clamping the tip.

Rear supporting and fixing member 7 is arranged on first surfer 5 to receive the tail of the foot support 2a so as to ensure a reliable fixation of the tail to first support 5. Thus, this rear supporting and fixing member 7 also consists of a base portion 7a for attached this member to first surfer 5 and two parallel arm portions 7b extending perpendicular to the top surfer of first surface for receiving the tail of foot support 2a. Preferably, the length of these arms portions is such that they extends sufficiently away from the top surface of first surfer 5 so as o allow to clamp the foot support 2a without having to remove rear-wheel 4 of the scooter. Depending on the design of the rear-wheel link to the scooter, these arms may e.g. extend, as shown, for a distance that corresponds to the diameter of the rear-wheel.

However, it may be understood that when using a smaller rear-wheel in a different mounting structure, the length of the arm portions will vary.

It may readily be understood that there are multiple ways in which the tail of the foot support is linked to first support 5. The main purpose of rear supporting and fixing member 7 is to support the rear part of the scooter, and further preferably also to ensure a reliable fixation of this rear part to first surfer 5. Thus, the described rear supporting and fixing member is in no way limiting, but is merely an example.

In an alternative construction, front and rear supporting and fixing members 6 and 7 may be formed integrally of one piece. Thus, these members may be physically linked to each other. However, it is also possible to only have a single supporting member on first surfer 5, this member ensuring the purpose of both the front and rear supporting and fixing members. As mentioned, the rear supporting and fixing member 7 has as main purpose to support the foot support and the rear-wheel section of the scooter. As the front supporting and fixing member 6 has as main purpose to support the foot support and to ensure a reliable fixation of such to the first surfer, so that it may be understood that a single supporting and fixing member may be used instead. For instance, this supporting and fixing member, not shown, may be arranged somewhere halfway the foot support to receive the foot support and to clamp the latter to the surfer thereby fixedly attaching it to the surfer.

From the above it may be readily understood that first surfer 5 can thus be easily removed from the scooter by simply pulling it off. As the attachment of first surfer to the scooter simply consists of clamping it, no screws and bolts are required thus allowing for quick mounting and unmounting of first surfer 5.

Second surfer 8 has a supporting and fixing member 9 which comprises a scooter-wheel receiving section 9a for receiving the front-wheel 3 of the scooter. As shown, supporting and fixing member 9 may consist of a base portion 9b and a fork portion 9c extending upwardly away from base portion 9b. This fork 9c is so dimensioned to receive the front wheel 3 of the scooter. Supporting and fixing member 9 further has scooter-wheel blocking means for maintaining the wheel 3 in scooter-wheel receiving section 9a so as to fixedly attach the scooter to second surfer 8. Again, a skilled person will have no difficulty in realising a suitable way for fixedly attaching the scooter to second surfer 8.

In the shown embodiment, fork 9c may have two arms that are divergent when leading away from base portion 9b so as to obtain a jamming effect of the front wheel therein. Thus, this divergent arrangement of these arms constitute the wheel-blocking means of scooter-wheel receiving section 9a. In order to improve reliable attachment of second surfer to the scooter, additional attachment means may be provided. For example, as shown, the arms of fork 9c have slots for receiving the fork of the steering bar of the scooter.

In an alternative construction, fork-locking means may be provided, such as a screw-on top for screwing on top of an arm of the fork portion 9c to close the slot thus locking the fork of the scooter in the wheel-receiving section 9a of supporting and fixing member 9.

Further, additional guiding means, such as small projections on the inside surface of these arms may be provided allowing to easily guide the fork of the scooter into fork portion 9c of the supporting and fixing member 9.

Again, it may be readily understood that second surfer 8 can be easily removed from the scooter by pulling on the handle bars of the scooter to pull out the scooter fork and its front wheel 3. Thus, no tools are required for the mounting and unmounting of second surfer 8.

Of course, other wheel-blocking means may be readily conceived. For example, instead of having a fork portion as shown, it is possible to have a jaw portion for receiving the entire front wheel 3. By closing the jaw, such as with a spring-mechanism, the wheel is locked in place. By opening the jaw, the wheel, and thus the scooter can be released from the second surfer.

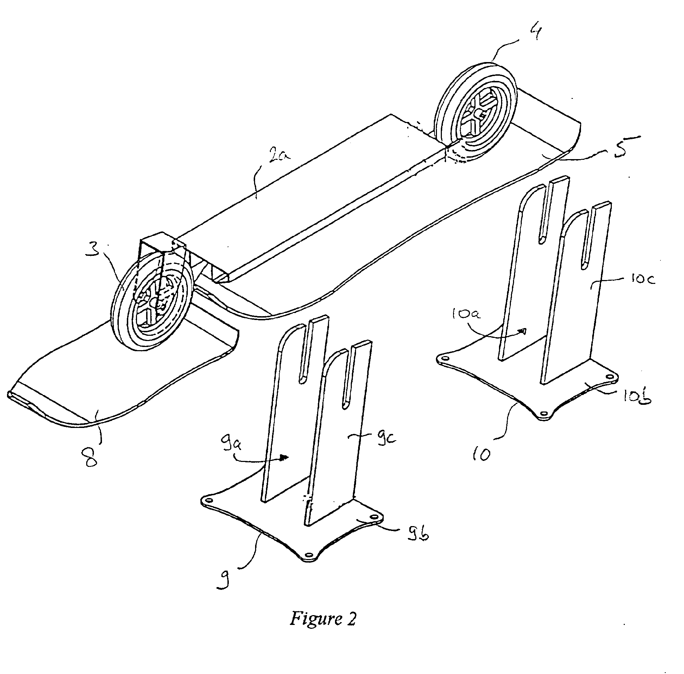

As shown in figure 2, first surfer 5 may have, instead of the above-mentioned supporting and fixing members 6 and 7, an alternative supporting and fixing member 10, which is basically similar to supporting and fixing member 9 of second surfer 8. Thus, this supporting and fixing member 10 also has a scooter-wheel receiving section 10a for receiving the rear-wheel 4 of the scooter. In analogy, scooter-wheel blocking means may be provided for maintaining rear-wheel 4 in first scooter-wheel receiving section 10a so as to fixedly attach the scooter to first surfer 5. Again, additional securing means may be provided to further improve the reliability of the attachment of first surfer 5 to the scooter.

Having described a preferred embodiment of this invention, it will now be apparent to one of skill in the art that other embodiments incorporating its concept may be used. It is felt, therefore, that this invention should not be limited to the disclosed embodiment, but rather should be limited only by the scope of the appended claims.

## Claims

1. A sliding apparatus (1) for a foot scooter (2) having a front- and a rear-wheel (3, 4), comprising:
- a first elongated surfer (5) having a first supporting and fixing member (6, 7) mounted on said first surfer (5), and a second elongated surfer (8) having a second supporting and fixing member (9) mounted on said second surfer (8), **characterised in that**
- said first supporting and fixing member (6) is arranged to support and grasp a foot-support (2a) of said scooter so as to fixedly attach said scooter to said first surfer (5), and **in that**
- wherein said second supporting and fixing member (9) has a scooter-wheel receiving section (9a) for receiving the front-wheel (3) of said scooter, and further having scooter-wheel blocking means for maintaining said wheel (3) in said scooter-wheel receiving section (9a) so as to fixedly attach said scooter to said second surfer (8),
thereby enabling said foot scooter to slide on snow.

2. A sliding apparatus (1) for a foot scooter (2) having a front- and a rear-wheel (3, 4), comprising:
- a first elongated surfer (5) having a first supporting and fixing member (10) mounted on said first surfer (5), and a second elongated surfer (8) having a second supporting and fixing member (9) mounted on said second surfer (8), **characterised in that**
- said first supporting and fixing member (10) has a first scooter-wheel receiving section (10a) for receiving the rear-wheel (4) of said scooter, and further having scooter-wheel blocking means for maintaining said wheel (4) in said first scooter-wheel receiving section (10a) so as to fixedly attach said scooter to said first surfer (5), and
- wherein said second supporting and fixing member (9) has a second scooter-wheel receiving section (9a) for receiving the front-wheel (3) of said scooter, and further having scooter-wheel blocking means for maintaining said wheel (3) in said second scooter-wheel receiving section (9a) so as to fixedly attach said scooter to said second surfer (8),
thereby enabling said foot scooter to slide on snow.

3. A sliding apparatus (1) according to claim 1 or 2, wherein said first and second surfer (5, 8) are physically linked to each other.

4. A sliding apparatus (1) according to claim 1, wherein said first supporting and fixing member consists of a front first supporting and fixing member (6) for fixing a tip portion of a foot support of said scooter to said first surfer (5), and a rear first supporting and fixing member (7) for fixing a tail portion of said foot support to said first surfer (5).

5. A sliding apparatus according to anyone of the preceding claims, wherein said second first supporting and fixing member (9) further comprises locking means for locking said front-wheel in said scooter-wheel receiving section (9a).
